(19) Europäisches Patentamt
European Patent Office
Office européen des brevets

(11) **EP 1 748 327 A1**

(12) **EUROPÄISCHE PATENTANMELDUNG**

(43) Veröffentlichungstag:
**31.01.2007 Patentblatt 2007/05**

(51) Int Cl.:
*G03H 1/08* (2006.01)   *G03H 1/00* (2006.01)

(21) Anmeldenummer: **05016355.9**

(22) Anmeldetag: **28.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder:
- **Carl, Daniel**
  **48157 Münster (DE)**
- **Kemper, Björn**
  **49086 Osnabrück (DE)**
- **von Bally, Gert**
  **48161 Münster (DE)**

(72) Erfinder:
- **Carl, Daniel**
  **48157 Münster (DE)**
- **Kemper, Björn**
  **49086 Osnabrück (DE)**
- **von Bally, Gert**
  **48161 Münster (DE)**

(74) Vertreter: **Manasse, Uwe**
**Forrester & Boehmert,**
**Pettenkoferstrasse 20-22**
**80336 München (DE)**

Bemerkungen:
Ein Antrag gemäss Regel 88 EPÜ auf Berichtigung der Patentansprüche liegt vor. Über diesen Antrag wird im Laufe des Verfahrens vor der Prüfungsabteilung eine Entscheidung getroffen werden (Richtlinien für die Prüfung im EPA, A-V, 3.).

(54) **Verfahren zur numerischen Rekonstruktion mindestens einer Ebene eines Objekts anhand eines digitalen off-axis-Hologramms von dem Objekt sowie ein digitalholographisches Mikroskop**

(57) Verfahren zur numerischen Rekonstruktion mindestens einer Ebene eines Objekts anhand eines digitalen off-axis-Hologramms von dem Objekt, das die Schritte umfaßt: Bereitstellen eines digitalen off-axis-Hologramms von einem Objekt, Berechnen der komplexen Amplitude der Objektwelle des Objekts in der Hologrammebene des digitalen off-axis-Hologramms mittels eines räumlichen Phasenschiebeverfahrens, und Propagieren der für die Hologrammebene berechneten komplexen Amplitude in mindestens eine zu genannter Hologrammebene parallele Ebene mittels der Faltungsmethode und digitalholographisches Mikroskop.

Figur 1

**Beschreibung**

Die vorliegende Erfindung betrifft ein Verfahren zur numerischen Rekonstruktion mindestens einer Ebene eines Objekts anhand eines digitalen off-axis-Hologramms von dem Objekt sowie ein digitalholographisches Mikroskop.

Derzeit wird zur numerischen Rekonstruktion von digitalen off-axis-Hologrammen, das heißt Hologrammen, die mittels einer Objektwelle und einer Referenzwelle aufgezeichnet sind, zwischen denen ein zumindest kleiner Winkel besteht, häufig entweder die diskrete Fresnel-Transformation (DFT) (Thomas M. Kreis, Maik Adams, Werner P. O. Jüptner "Methods digital holography: A comparison", SPIE, Band 3098, Seiten 224 bis 233) oder die Faltungsmethode (Convolution Method (CVM)) (a.a.O.) verwendet. Es handelt sich dabei um direkte Rekonstruktionsverfahren, das heißt Verfahren, bei denen das Fresnel'sche Beugungsintegral numerisch berechnet wird.

Die DFT weist für eine off-axis-Anordnung die Nachteile auf, daß bei großen Rekonstruktionsabständen die Phase sehr stark variiert, was bei der Rekonstruktion der räumlichen Phasenverteilung starkes Aliasing zur Folge hat, sich aber nicht auf die Amplitude bzw. die Intensität des rekonstruierten holographischen Bildes auswirkt, und, auch wenn das Twin-Image und nullte Beugungsordnung sowie das reelle Bild (Image) zwar räumlich getrennt rekonstruiert werden, dadurch aber der Bildbereich reduziert wird, der für das reelle Bild zur Verfügung steht. Bei kleinen Rekonstruktionsabständen ist mit der DFT durch Aliasing eine Rekonstruktion sogar überhaupt nicht möglich. Darüber hinaus ist die rekonstruierte mittlere Intensitätsverteilung der nullten Beugungsordnung um ein Vielfaches größer als diejenige des reellen Bildes und des Twin-Image, so daß das reelle Bild erst durch weitere Bildverarbeitung, zum Beispiel durch eine logarithmische Darstellung, mit ausreichendem Kontrast sichtbar wird.

Weiterhin gehört zur DFT eine Koordinatentransformation, die zur Folge hat, daß die Größe des rekonstruierten Bildes linear mit dem Rekonstruktionsabstand z ansteigt.

Bei der CVM werden ebenfalls neben demselben Bild sowohl die nullte Beugungsordnung als auch das Twin-Image rekonstruiert. Bei der CVM bleibt aber der Abbildungsmaßstab konstant, das heißt unabhängig vom Rekonstruktionsabstand. Es treten jedoch Aliasing-Effekte bei größeren Rekonstruktionsabständen auf.

Aus der Veröffentlichung von Daniel Carl, Björn Kemper, Günther Wemicke und Gert von Bally, "Parameter-Optimized Digital Holographic Microscope for High Resolution Living-Cell Analysis", Applied Optics, Band 43, Nr. 36, 20. Dezember 2004, Seiten 6536 bis 6544, ist ein Verfahren zur numerischen Rekonstruktion mindestens einer Ebene eines Objekts anhand eines digitalen off-axis-Hologramms von dem Objekt bekannt, bei dem die komplexe Amplitude der Objektwelle des Objekts in der Hologrammebene des digitalen off-axis-Hologramms mittels der nicht-beugenden Rekonstruktionsmethode (Non-Diffractive Reconstruction Methode (NDRM)), die ein räumliches Phasenschiebeverfahren darstellt und von Michael Liebling, Thierry Blu und Michael Unser in "Complex-wave retrieval from a single off-axis hologram", J. Opt. Soc. Am A, Band 21, Nr. 3, März 2004, Seiten 367 bis 377, beschrieben ist, berechnet und nachfolgend die für die Hologrammebene berechnete komplexe Amplitude in mindestens eine zu genannter Hologrammebene parallele Ebene mittels der obengenannten DFT propagiert wird.

Die Kombination von NDRM und DFT weist zwar den Vorteil auf, daß weder die nullte Beugungsnordnung noch das Twin-Image rekonstruiert werden, sie weist jedoch den Nachteil auf, daß sie zur Vermeidung von Aliasing nur bei großen Rekonstruktionsabständen eingesetzt werden kann.

Der Erfindung liegt somit die Aufgabe zugrunde, ein Verfahren bereitzustellen, mit dem auch nicht in der Ebene eines Hologramms scharf abgebildete Objektebenen eines Objekts, zum Beispiel nur etwas defokussierte Objektebenen, ohne Twin-Image und ohne nullte Beugungsordnung mit demselben Abbildungsmaßstab rekonstruiert werden können.

Erfindungsgemäß wird diese Aufgabe gelöst durch ein Verfahren zur numerischen Rekonstruktion mindestens einer Ebene eines Objekts anhand eines digitalen off-axis-Hologramms von dem Objekt, das die Schritte umfaßt:

a) Bereitstellen eines digitalen off-axis-Hologramms von einem Objekt,

b) Berechnen der komplexen Amplitude der Objektwelle des Objekts in der Hologrammebene des digitalen off-axis-Hologramms mittels eines räumlichen Phasenschiebeverfahrens, und

c) Propagieren der für die Hologrammebene berechneten komplexen Amplitude in mindestens eine zu genannter Hologrammebene parallele Ebene mittels der Faltungsmethode.

Hinsichtlich Details zur Faltungsmethode (CVM) wird auf die obengenannte Veröffentlichung von Thomas M. Kreis et al. verwiesen, deren Inhalt hierin durch Bezugnahme vollumfänglich aufgenommen wird.

Das Propagieren der berechneten komplexen Amplitude in eine weitere Ebene kann zusätzliche Information oder einen höheren Informationsgehalt als die Rekonstruktion lediglich in der Hologrammebene liefern.

Gemäß einer besonderen Ausführungsform der Erfindung kann vorgesehen sein, daß das räumliche Phasenschiebeverfahren die nicht-beugende Rekonstruktionsmethode (NDRM) umfaßt. Hinsichtlich Details zur NDRM wird auf die oben zur NDRM genannte Veröffentlichung von Liebling et al. verwiesen, deren Inhalt hierin durch Bezugnahme vollumfänglich aufgenommen wird.

Alternativ kann vorgesehen sein, daß das räumliche Phasenschiebeverfahren die Fouriertransformationsmethode (FTM) umfaßt. Hinsichtlich Details zur FTM wird auf die beiden Veröffentlichungen von Thomas Fricke-Bergemann und Jan Burke "Speckle interferometry: three-dimensional deformation field measurement with a single interferogram, Applied Optics, Band 40, Nr. 28, Seiten 5011 - 5022, sowie von Akram El Jarad, Gerd Gülker und Klaus D. Hinsch "Microscopic ESPI: Better fringe quality by the Fourier transform method, Proc. Speckle Metrology, Seiten 335 - 242 (2003) verwiesen, deren Inhalte hierin durch Bezugnahme vollumfänglich aufgenommen werden.

Gemäß einer weiteren besonderen Ausführungsform der Erfindung kann vorgesehen sein, daß das Verfahren ferner umfaßt:

d) Bestimmen der Schärfe des rekonstruierten Objekts in der zu genannter Hologrammebene parallelen Ebene anhand mindestens eines Schärfekriteriums und, falls das Schärfekriterium bzw. die Schärfekriterien nicht erfüllt sind, Wiederholen der Schritte c) und d) für eine weitere zu genannter Hologrammebene parallele Ebene.

Die Ausführungsform gemäß Anspruch 4 dient dazu, eine Nachfokussierung vorzunehmen. Diese kann zum Beispiel durch thermische Drift oder mechanische Instabilität erforderlich sein.

Vorzugsweise ist das Schärfekriterium bzw. mindestens ein Schärfekriterium die Auflösung, der Kontrastumfang oder die Konturenschärfe.

Auch kann vorgesehen sein, daß ein Maximal- oder Minimalwert des Schärfekriteriums gesucht wird. Beispielsweise kann die in einem Autofokussierungsverfahren die Objektebene mit der höchsten Auflösung gesucht werden.

Zweckmäßigerweise wird der Maximal- bzw. Minimalwert durch ein Iterationsverfahren ermittelt. Das Iterationsverfahren läßt sich kostengünstig und schnell auf einem Computer durchführen.

Gemäß einer weiteren besonderen Ausführungsform der Erfindung kann vorgesehen sein, daß der Schritt c) für mindestens eine weitere zu genannter Hologrammebene parallele Ebene durchgeführt wird. Dadurch können gezielt interessierende Objektebenen rekonstruiert werden.

Vorzugsteilhafterweise wird dazu ein Zusammenhang zwischen Objektebenen- und Rekonstruktionsabstand ermittelt.

Gemäß einer weiteren besonderen Ausführungsform der Erfindung werden die berechneten komplexen Amplituden für die Hologrammebene und mindestens eine zu genannter Hologrammebene parallele Ebene oder mindestens zwei zu genannter Hologrammebene parallelen Ebenen aufsummiert. Dadurch läßt sich eine Vergrößerung der Schärfentiefe, insbesondere bei Mikroskopen, erzielen.

Günstigerweise wird das digitale off-axis-Hologramm mittels eines Halbleiterelements, insbesondere eines CCD-Sensors, aufgezeichnet, nachfolgend diskretisiert und zur digitalen Weiterverarbeitung in einer Datenverarbeitungseinrichtung, insbesondere einem Computer, gespeichert.

Weiterhin kann vorgesehen sein, daß das off-axis-Hologramm mittels eines digitalholographischen Mikroskops bereitgestellt wird.

Dabei ist denkbar, daß das Mikroskop in einem Durchlichtbetrieb betrieben wird.

Alternativ kann das Mikroskop in einem Auflichtbetrieb betrieben werden.

Gemäß einer bevorzugten Ausführungsform der Erfindung wird das off-axis-Hologramm mit Lichtstrahlung aufgezeichnet. Selbstverständlich gilt jedoch das Verfahren ganz allgemein für elektromagnetische Wellen.

Gemäß einem weiteren Aspekt der vorliegenden Erfindung wird diese Aufgabe gelöst durch ein digitalholographisches Mikroskop, gekennzeichnet durch eine elektronische Rekonstruktionseinrichtung, die gestaltet ist, um anhand eines mit dem Mikroskop aufgezeichneten digitalen off-axis-Hologramms von einem Objekt die komplexe Amplitude der Objektwelle des Objekts in der Hologrammebene des digitalen off axis-Hologramms mittels eines räumlichen Phasenschiebeverfahrens zu berechnen und die für die Hologrammebene berechnete komplexe Amplitude in mindestens eine zu genannter Hologrammebene parallele Ebene mittels der Faltungsmethode zu propagieren.

Günstigerweise ist die elektronische Rekonstruktionseinrichtung gestaltet, um zusätzlich mindestens einen der Verfahrensschritte gemäß einem der Ansprüche 2 bis 9 auszuführen.

Der Erfindung liegt die überraschende Erkenntnis zugrunde, daß entgegen der bisherigen Annahme die CVM auch bei kleinen Rekonstruktionsabständen, wie sie insbesondere in der Mikroskopie auftreten, eingesetzt werden kann. Es wurde nämlich fälschlicherweise angenommen, daß die Fresnel-Approximation nur für große Rekonstruktionsabstände gelte und somit die CVM nicht bei kleinen Rekonstruktionsabständen verwendbar sei.

Durch die Kombination eines räumlichen Phasenschiebeverfahrens mit der CVM wird erstmalig erreicht, daß auch nicht in der Ebene eines off-axis-Hologramms scharf abgebildete Objektebenen eines Objekts ohne Twin-Image und ohne nullte Beugungsordnung mit konstantem Abbildungsmaßstab rekonstruiert werden können.

Ein weiterer für die Praxis wichtiger Vorteil besteht darin, daß das Objekt (die Probe) auf einen CCD-Sensor scharf abgebildet und auf diese Weise einfach ausgerichtet und positioniert werden kann.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:

Figur 1     einen Ausschnitt aus einem digitalholographischen Mikroskop zur Aufzeichnung eines digitalen off-axis-Hologramms eines Objekts und zur numerischen Rekonstruktion von mehreren Objektebenen gemäß einer besonderen Ausführungsform des erfindungsgemäßen Verfahrens in Durchlicht;

Figur 2     einen Ausschnitt aus einem digitalholographischen Mikroskop zur Aufzeichnung eines digitalen off-axis-Hologramms eines Objekts und zur numerischen Rekonstruktion von mehreren Objektebenen gemäß einer besonderen Ausführungsform des erfindungsgemäßen Verfahrens in Auflicht gemäß einer besonderen Ausführungsform gemäß einer weiteren besonderen Ausführungsform; und

Figur 3     (a) eine Hellfeld-Aufnahme eines Teils eines Fliegenflügels mit Ausschnittsvergrößerung,

              (b) eine rekonstruierte Amplitudenverteilung mit Ausschnittsvergrößerung (gleiche Objektebene wie in (a) auf Hologramm scharf abgebildet),

              (c) eine Phasenverteilung zu (b),

              (d) ein digitales Hologramm des Fliegenflügels,

              (e) im Abstand $\Delta g$ = 35 $\mu$m rekonstruierte Objektebene mit Ausschnittsvergrößerung und

              (f) eine Phasenverteilung zu (e).

Mittels eines digitalholographischen Mikroskops gemäß einer besonderen Ausführungsform der Erfindung lassen sich Lebensvorgänge auf zellulärer Ebene untersuchen. Anhand der Untersuchungen können quantitative Aussagen über die räumliche Dickenverteilung und den Brechungsindex an lebenden Zellen gemacht werden. Grundlegende Voraussetzung für Messungen an Zellen ist eine laterale Auflösung, die mit der Hellfeld-Mikroskopie vergleichbar ist ($\lesssim$ 1 $\mu$m). Die Analyse (stimulierter) dynamischer Vorgänge erfordert darüber hinaus eine angepaßte zeitliche Auflösung der Hologrammaufnahme in oder nahe der Videowiederholrate. Darüber hinaus ist die On-Line-Visualisierung einer rekonstruierten Objektwelle (räumliche Amplituden- und Phasenverteilung) von großem Vorteil für das experimentelle Arbeiten.

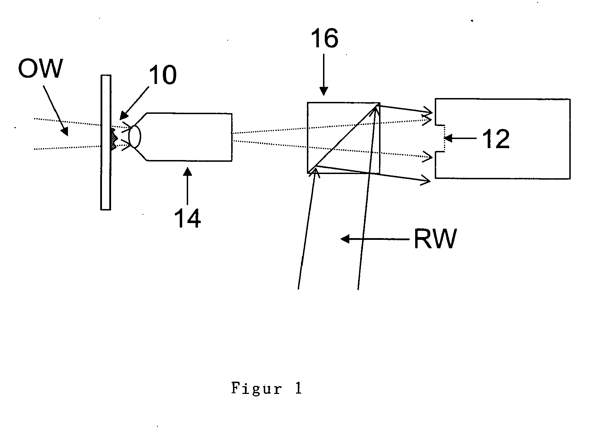

Da Zellen im ungefärbten Zustand nahezu vollständig transparent erscheinen, wurde ein Aufbau eines digitalholographischen Mikroskops in Durchlichtanordnung realisiert (siehe Figur 1), von dem nur ein Teil dargestellt ist. Das digitalholographische Mikroskop basiert auf einer modifizierten "Mach-Zehnder"-Interferometer-Anordnung. Das von einem frequenzverdoppelten Nd:YAG-Laser (nicht gezeigt) emittierte Licht ($\lambda$ = 532 nm, P = 5 mW - 100 mW stufenlos regelbar) wird von einem Strahlteiler (nicht gezeigt) in eine Objektwelle OW und eine Referenzwelle RW aufgeteilt, deren Intensitäten durch Graufilter (nicht gezeigt) abgeschwächt werden können. Danach werden beide Wellen zur Raumfrequenzfilterung mit einem Mikroskopobjektiv (20x, NA = 0,4) (nicht gezeigt) auf ein Pinhole (nicht gezeigt) mit einem Durchmesser von 10 $\mu$m fokussiert. Die Referenzwelle RW wird anschließend mit einer plankonvexen Linse (nicht gezeigt) (Brennweite 100 mm) kollimiert, so daß die numerische Rekonstruktion mit dem mathematischen Modell einer ebenen Referenzwelle durchgeführt werden kann, zum Beispiel mit der durch die nachfolgende Gleichung:

$$\Psi_z(m,n) = \frac{\exp(i\frac{2\pi z}{\lambda})}{i\lambda z} \exp\left(i\pi\lambda z\left(\frac{m^2}{N_x^2 \Delta x^2} + \frac{n^2}{N_y^2 \Delta y^2}\right)\right) x$$

$$\sum_{k=0}^{Nx-1}\sum_{l=0}^{Ny-1} \Psi_0(k,l) \exp\left(i\frac{\pi}{\lambda z}(k^2\Delta x^2 + l^2\Delta y^2)\right) \exp\left(-i2\pi\left(\frac{km}{N_x} + \frac{ln}{N_y}\right)\right)$$

beschriebenen DFT (Diskrete Fresnel-Transformation).

$\Psi_z(m,n)$      Im Rekonstrutionsabstand $z$ zur Hologrammebene rekonstruierte komplexe Objektwelle (diskrete Koordinaten)

$\Psi_0(k,l)$      komplexe Objektwelle in der Hologrammebene (diskrete Koordinaten).
Wird die DFT direkt zur Rekonstruktion eingesetzt, muß $\Psi_0(k,l)$ in der Formel durch $I_H(k,l)$ ersetzt werden

$I_H(k,l)$      Diskrete räumliche Intensitätsverteilung des digitalen Hologramms

$\lambda$      Wellenlänge des verwendeten Lasers bzw. allg. der EM-Strahlung

$\Delta x, \Delta y$      Pixelabstand des verwendeten Rasterbildsensors (z. B. CCD-Sensor)

$z$      Rekonstruktionsabstand (Abstand zwischen Hologrammebene und rekonstruierter Bildebene.

$N_x, N_y$      Anzahl der diskreten Werte des digitalen Hologramms in x- bzw. y-Richtung,

wobei hier und im folgenden für die Koordinatendarstellung folgendes gilt:

|  | **Hologrammebene** | **Bildebene** |
|---|---|---|
| kontinuierlich | $(x,y)$ | $(\xi,\eta)$ |
| diskret | $(k,l) = \vec{\chi}$ | $(m,n)$ |

Die Beleuchtung (nicht gezeigt) des Objekts 10 ist zur Minimierung von Streulicht der in der Mikroskopie gebräuchlichen Köhlerschen Beleuchtung nachempfunden. Dazu wird mit einer Plankonvex-Linse (nicht gezeigt) (Brennweite 50 mm), die als Kondensor fungiert, in der Objektebene ein Beleuchtungsfleck erzeugt, der gerade so groß ist, daß nur der auf einen CCD-Sensor 12 abgebildete Bereich beleuchtet wird. Um Streulicht auszublenden, wird zusätzlich eine Aperturblende (nicht gezeigt) in den Aufbau integriert. Mit Hilfe des Kondensors (nicht gezeigt) und der Aperturblende (nicht gezeigt) kann das Objekt 10 mit einem an die numerische Apertur des Mikroskopobjektivs (nicht gezeigt) angepaßten Lichtkegel beleuchtet werden.

Für die Durchführung der Experimente standen Mikroskopobjektive zu Verfügung, die für eine Abbildung in die Zwischenbildebene oder für eine Abbildung ins Unendliche optimiert sind. Eine Abbildung in die Zwischenbildebene bedeutet, daß die mikroskopische Vergrößerung in zwei Stufen erfolgt. Zunächst wird das vergrößerte Bild des Objekts mit einem Mikroskopobjektiv 14 in die Zwischenbildebene abgebildet. Zur Beobachtung wird dieses Zwischenbild durch ein als Lupe wirkendes Okular (nicht gezeigt) betrachtet. Der CCD-Sensor 12 wird daher in der Zwischenbildebene plaziert, so daß der Abstand zwischen Mikroskopobjektiv 14 und CCD-Sensor 12 der mechanischen Tubuslänge (160 mm) von Standard-Mikroskopen entspricht.

Bei der Verwendung von Mikroskopobjektiven, die scharf ins Unendliche abbilden, wird zusätzlich eine bikonvexe Linse (nicht gezeigt) (Brennweite 160 mm), die in der Mikroskopie auch als Tubuslinse bezeichnet wird, in den Strahlengang integriert. Das System aus Mikroskopobjektiv 14 und Tubuslinse (nicht gezeigt) bildet dann das reelle Bild des Objekts aus dem Unendlichen wieder scharf in die Zwischenbildebene 8 und wirkt damit wie ein Objektiv, das für eine Abbildung in die Zwischenbildebene konstruiert wurde.

Die holographische "off-axis"-Anordnung wird dadurch realisiert, daß die Referenzwelle RW der Objektwelle OW mit Hilfe eines verkippten Strahlteilerwürfels 16 überlagert wird. Um ein Unterabtasten und damit verbundenes Aliasing der entstehenden Interferenzstreifen, die auch als "Trägerstreifen" bezeichnet werden, zu verhindern, darf der

Winkel $\beta_{max} = \sin^{-1}\left(\frac{\lambda}{2\Delta x}\right)$ zwischen Objekt- und Referenzwellen nicht überschritten werden. Andererseits erfordert die räumliche Trennung von reellem Bild ("Image") und nullter Beugungsordnung, daß der Winkel $\beta_{min} = \tan^{-1}\left(\frac{Nx\Delta x}{2z}\right)$

nicht überschritten wird.

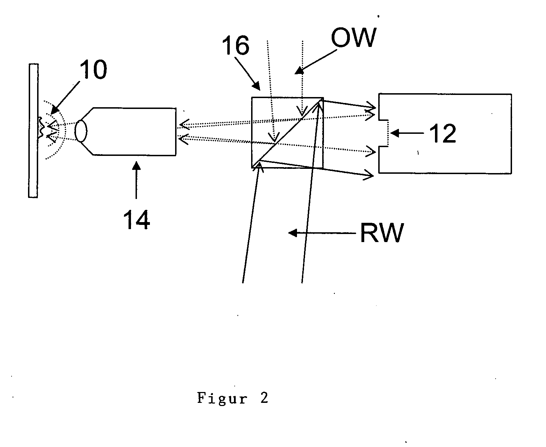

Der in Figur 2 dargestellte Aufbau dient zur Messung an reflektiven, zum Beispiel technischen Objekten. Er unterscheidet sich von dem in Figur 1 gezeigten Aufbau darin, daß das Objekt 10 in Auflicht mit der Objektwelle OW beleuchtet wird.

Die in den Figuren 1 und 2 dargestellten Experimentalaufbauten können in der Praxis auch in einem kombinierten Aufbau realisiert werden. Mit Hilfe von mechanischen Shuttern kann wahlweise die Durchlicht- oder die Auflichtbeleuchtung des Objekts ausgeblendet werden.

Die Digitalisierung der off-axis-Hologramme erfolgte mit hochauflösenden CCD-Sensoren. Das von den CCD-Sensoren aufgezeichnete Bild wurde über eine zugehörige Bilderfassungskarte bzw. über eine IEEE1394-Schnittstelle an einen Computer (nicht gezeigt) zur weiteren Bildverarbeitung übertragen. Dort wurden die digitalen Hologramme als 16-Bit-Bild im B16-Format (PCO Sensicam) bzw. als 8-Bit-Bild im BMP-Format (Kameras mit IEEE1394-Schnittstelle) auf einer Festplatte gespeichert.

Für die Justage des Aufbaus und die Visualisierung dynamischer Vorgänge war eine on-line-Bildgebung der rekonstruierten räumlichen Amplituden- und Phasenverteilungen erforderlich. Dazu wurde in die Software zur numerischen Rekonstruktion eine Schnittstelle implementiert, die den Zugriff auf die über die IEEE1394-Schnittstelle übertragenen Bildinformationen ermöglicht.

Anhand eines digitalen off-axis-Hologramms von einem Objekt wurde zunächst einmal die komplexe Amplitude der Objektwelle des Objekts in der Hologrammebene des digitalen off-axis-Hologramms mittels der nicht-beugenden Rekonstruktionsmethode (NDRM) wie folgt berechnet:

Die NDRM basiert auf der Annahme, daß nur die Phasendifferenz $\varphi\left(\vec{x}\right)$ zwischen Objekt- und Referenzwelle hochfrequente Änderungen der Intensität $I_H\left(\vec{x}\right)$ im digitalen Hologramm verursachen, so daß die Objektwelle in der Umgebung eines Punktes $\vec{x} = (k,l)$ von M Pixeln (i = 1, ..., M) als Konstante angenommen werden kann. Mit dieser Annahme läßt sich die komplexe Objektwelle $\Psi_0\left(\vec{x}\right)$ in der Hologrammebene am Punkt $\vec{x}$ durch Lösen eines nichtlinearen Gleichungssystems, das aus M Gleichungen besteht, die der Interferogrammgleichung am Ort $\vec{x} + \vec{x}_i$ entsprechen, berechnen:

$$I_H\left(\vec{x}+\vec{x}_i\right) = \left| \Psi_0\left(\vec{x}\right) + A_R\left(\vec{x}\right)\exp\left(i\varphi\left(\vec{x}+\vec{x}_i\right)\right)\right|^2$$

mit

$$\Psi_0\left(\vec{x}\right) \approx \Psi_0\left(\vec{x}+\vec{x}_i\right)$$

$\varphi\left(\vec{x}+\vec{x}_i\right)$  Räumliche Verteilung der Differenzphase zwischen Objekt- und Referenzwelle in der Hologrammebene ohne das Vorhandensein eines Objekts im Strahlengang. und $A_R\left(\vec{x}\right) \approx A_R\left(\vec{x}+\vec{x}_i\right)$ Amplitude der Referenz-welle

Daraus ergibt sich:

$$\Psi_0\left(k,l\right) = \frac{\left(e-a^*c\right)\left(b-aa\right)-\left(d-ac\right)\left(1-a^*a\right)}{\left(b^*-aa\right)\left(b-aa\right)-\left(1-a^*a\right)\left(1-a^*a\right)}$$

mit

$$a := a\left(k,l\right) := \frac{1}{M}\sum_m \Phi\left(k_m,l_m\right)$$

$$b := b(k,l) := \frac{1}{M}\sum_m \Phi^2(k_m, l_m)$$

$$c := c(k,l) := \frac{1}{M}\sum_m I_H(k_m, l_m)$$

$$d := d(k,l) := \frac{1}{M}\sum_m \Phi(k_m, l_m) I_H(k_m, l_m)$$

$$e := e(k,l) := \frac{1}{M}\sum_m \Phi^*(k_m, l_m) I_H(k_m, l_m)$$

und mit

$$\Phi(k,l) := \exp\left(i\Delta\varphi(k,l)\right)$$

Dabei ist M die Anzahl der Pixel der *Region-of-Interest,* in dem die Objektwelle als konstant vorausgesetzt wird. Dies liefert besagte M Gleichungen.

Alternativ zur Rekonstruktion im Ortsraum gemäß der NDRM könnte auch mit der Fouriertransformationsmethode (FTM) die komplexe Objektwelle aus einem digitalen off-axis-Hologramm bzw. einem räumlich phasenverschobenen Interferogramm im Frequenzraum rekonstruiert werden. Nach der FTM erfolgt die Rekonstruktion der komplexen Objektwelle in der Hologrammebene durch die spektrale Filterung (Ausschneiden des reellen Bildes ("Image")) und die anschließende Multiplikation mit einem komplexen Exponentialfaktor im Ortsraum, durch die die linearen und quadratischen Anteile der räumlichen Phasenverteilung $\varphi$ (x,y) in der Hologrammebene kompensiert werden. In diskreter Schreibweise mit Ortskoordinaten (x,y) → (k,l) und $\mathcal{F}$ {g(x,y)} → FFT {g(k,l)} ergibt sich:

$$\Psi(k,l) = FFT^{-1}\left\{FFT\left\{I_H(k,l)\right\} w(k,l)\exp\left(i\varphi(k,l)\right)\right\}$$

Dabei wird das Ausschneiden des reellen Bildes aus dem Raumfrequenzspektrum des digitalen Hologramms $\mathcal{F}$ {I$_H$ (k,l)} durch die Multiplikation mit der diskreten Gewichtungsfunktion *w* (k,l) realisiert.

Die in der vorangehend beschriebenen Weise berechnete komplexe Amplitude der Objektwelle des Objekts in der Hologrammebene des digitalen off-axis-Hologramms wird nachfolgend in eine zu genannter Hologrammebene parallele Ebene mittels der Faltungsmethode (CVM) wie folgt propagiert:

Es läßt sich zeigen, daß die komplexe Amplitude wie folgt ausgedrückt werden kann:

$$\Psi_z(x,y) = \mathcal{F}^{-1}\left\{\mathcal{F}\left\{\Psi_0(x,y)\right\}\exp\left(i\pi\lambda z(\xi^2 + \eta^2)\right)\right\}.$$

Alternativ zur DFT wird hier nicht die räumliche Amplitudenverteilung $\Psi_0$ (*x, y*) selbst propagiert, sondern deren

Raumfrequenzspektrum $\mathcal{F}$ $\{\Psi_0(x, y)\}$ und anschließend eine inverse Fourier-Transformation durchgeführt. Die durch die vorangehende Gleichung beschriebene Transformation wird in der Literatur als Faltungs-Methode ("Convolution Method", kurz CVM) bezeichnet. In eine diskrete Schreibweise überführt, ergibt sich aus der vorangehenden Gleichung:

$$\Psi_z(k,l) = FFT^{-1}\left\{FFT\left\{\Psi_0(k,l)\right\}\exp\left(i\pi\lambda z\left(\frac{m^2}{\Delta x^2 N_x^2} + \frac{n^2}{\Delta y^2 N_y^2}\right)\right)\right\}.$$

Der quadratische Phasenfaktor in der vorangehenden Gleichung erfüllt das Abtasttheorem unter der Bedingung (eindimensional für $\Delta x$):

$$|z| \le \frac{\Delta x^2 N_x}{\lambda} \ ,$$

so daß für kleine Rekonstruktionsabstände z im Gegensatz zur DFT kein Aliasing auftritt.

Durch eine große numerische Apertur der Abbildungsoptik, die für eine hohe laterale Auflösung erforderlich ist, wird die Schärfentiefe reduziert. Bei der Untersuchung von Objekten, deren Höhe bzw. Dicke größer als der Schärfentiefebereich ist, erfolgt durch unscharf abgebildete Objektebenen eine Beeinträchtigung der Bildqualität. Die Informationen über unscharf abgebildete Objektebenen gehen dabei verloren bzw. sind von unzureichender Qualität.

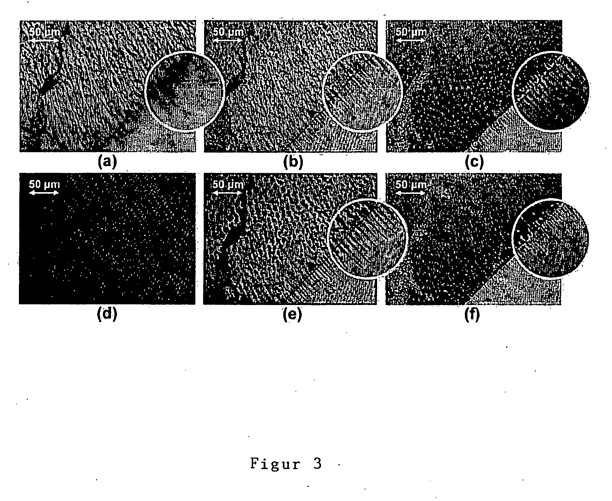

Bei der digitalholographischen Mikroskopie werden dagegen Amplitude und Phase der Objektwelle gespeichert. Dabei wird durch den Rekonstruktionsabstand z, der als Parameter in die Formel zur numerischen Rekonstruktion eingeht, bestimmt, welche Objektebene scharf rekonstruiert wird. Mit dem experimentellen Aufbau gemäß Figur 1 wurde im Hellfeld (Beleuchtung mit einer Halogenlampe) das vergrößerte Bild eines Teils eines Fliegenflügels aufgezeichnet (siehe Figur 3(a)). Dabei wurde ein 20x Mikroskopobjektiv (NA = 0,4) mit einer Schärfentiefe von $z_{dof}$ = 3,9 $\mu$m verwendet. Aufgrund der begrenzten Schärfentiefe ist der obere linke Teil des Fliegenflügels scharf abgebildet. Die Haare am Rand des Flügels im unteren rechten Bildbereich (Ausschnittsvergrößerung) werden unscharf abgebildet und sind deshalb kaum voneinander zu unterscheiden.

Mit identischer Aufnahmegeometrie wurde zusätzlich ein digitales Hologramm (Figur 3(d)) der gleichen Bildebene (Hologrammebene) gespeichert. Außer dem Hologramm wurden durch NDRM und nachfolgende CVM verschiedene Bildebenen (Objektebenen) rekonstruiert ("numerischer Fokus"). Figur 3(e) zeigt die im Objektebenenabstand $\Delta g$ = 35 $\mu$m, wobei Objektebenenabstand und Rekonstruktionsabstand in Beziehung zueinander stehen, rekonstruierte Amplitudenverteilung. Die Haare des Fliegenflügels (Ausschnittsvergrößerung) werden jetzt scharf rekonstruiert und sind gut voneinander zu unterscheiden. Die zugehörigen ebenfalls konstruierten räumlichen Phasenverteilungen sind in Figur 3(c) und (f) dargestellt. Dabei ist der Kontrast der Haare (Ausschnittsvergrößerung) gegenüber der Amplitudenverteilung sehr niedrig.

Einige Mikroskophersteller erweitern die durch das Mikroskopobjektiv begrenzte Schärfentiefe, indem der Fokustrieb des Mikroskops mechanisch (manuell oder automatisiert) wenige Mikrometer vor- und zurückbewegt wird. Dabei werden Bilder in verschiedenen Fokuspositionen aufgezeichnet und anschließend mit einer entsprechenden Software zu einem Bild erweiterter Schärfentiefe zusammengefügt. Dieses Prinzip läßt sich auch auf die digitalholographische Mikroskopie übertragen, mit dem Vorteil, daß aus einem einzigen digitalen Hologramm verschiedene Objektebenen rekonstruiert werden können ("numerischer Fokus"). In jeder rekonstruierten Objektebene werden dabei spezifische Objektstrukturen scharf abgebildet, während andere Strukturen unscharf erscheinen. Das einfache Aufsummieren der Objektebenen ist nur durch die Rekonstruktion mit der NDRM und nachfolgenden CVM möglich, da hier bei der Propagation der Objektwelle der Abbildungsmaßstab und die Pixelauflösung konstant bleiben.

Bei Messungen von mehreren Minuten oder Stunden, die zum Beispiel bei der Untersuchung von Zellmigration erforderlich sind, treten durch Setzungserscheinungen und thermische Ausdehnung der mechanischen Komponenten des Aufbaus im allgemeinen Veränderungen der räumlichen Phasenverteilung in der Hologrammebene auf. Werden Objekte in einem Flüssigkeitsfilm untersucht, verursachen kleinste Erschütterungen, zum Beispiel Gebäudeschwingungen, die durch umherlaufende Personen und Straßenverkehr entstehen, sowie thermische Fluktuationen Bewegungen der Flüssigkeit, was ebenfalls zu Änderungen der räumlichen Phasenverteilung führen kann. Derartige Störungen sind der rekonstruierten räumlichen Phasenverteilung der Objektwelle überlagert und beeinträchtigen die Meßergebnisse.

Das erfindungsgemäße Verfahren ermöglicht eine Scharfstellung, das heißt Nachfokussierung, um die interessierende Objektwelle auch nach längerer Zeit immer noch scharf abzubilden.

In den Figuren 1 und 2 sind in den optischen Aufbauten jeweilige Abbildungsoptiken verwendet worden. Diese sind aber nicht in jedem Fall erforderlich.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Patentansprüche**

**2.** Verfahren zur numerischen Rekonstruktion mindestens einer Ebene eines Objekts (10) anhand eines digitalen off-axis-Hologramms von dem Objekt (10), das die Schritte umfaßt:

a) Bereitstellen eines digitalen off-axis-Hologramms von einem Objekt (10),
b) Berechnen der komplexen Amplitude der Objektwelle (OW) des Objekts (10) in der Hologrammebene des digitalen off-axis-Hologramms mittels eines räumlichen Phasenschiebeverfahrens, und
c) Propagieren der für die Hologrammebene berechneten komplexen Amplitude in mindestens eine zu genannter Hologrammebene parallele Ebene mittels der Faltungsmethode.

**3.** Verfahren nach Anspruch 1, **dadurch gekennzeichnet, daß** das räumliche Phasenschiebeverfahren die nicht-beugende Rekonstruktionsmethode umfaßt.

**4.** Verfahren nach Anspruch 1, **dadurch gekennzeichnet, daß** das räumliche Phasenschiebeverfahren die Fouriertransformationsmethode umfaßt.

**5.** Verfahren nach einem der Ansprüche 1 bis 3, **dadurch gekennzeichnet, daß** es ferner umfaßt:

d) Bestimmen der Schärfe des rekonstruierten Objekts (10) in der zu genannter Hologrammebene parallelen Ebene anhand mindestens eines Schärfekriteriums und, falls das Schärfekriterium bzw. die Schärfekriterien nicht erfüllt sind, Wiederholen der Schritte c) und d) für eine weitere zu genannter Hologrammebene parallele Ebene.

**6.** Verfahren nach Anspruch 4, **dadurch gekennzeichnet, daß** das Schärfekriterium bzw. mindestens ein Schärfekriterium die Auflösung, der Kontrastumfang oder die Konturenschärfe ist.

**7.** Verfahren nach Anspruch 4 oder 5, **dadurch gekennzeichnet, daß** ein Maximal- oder Minimalwert des Schärfekriteriums gesucht wird.

**8.** Verfahren nach Anspruch 6, **dadurch gekennzeichnet, daß** der Maximal- bzw. Minimalwert durch ein Iterationsverfahren ermittelt wird.

**9.** Verfahren nach einem der Ansprüche 1 bis 3, **dadurch gekennzeichnet, daß** der Schritt c) für mindestens eine weitere zu genannter Hologrammebene parallele Ebene durchgeführt wird.

**10.** Verfahren nach Anspruch 8, **dadurch gekennzeichnet, daß** die berechneten komplexen Amplituden für die Hologrammebene und mindestens eine zu genannter Hologrammebene parallele Ebene oder für mindestens zwei zu genannter Hologrammebene parallele Ebenen aufsummiert werden.

**11.** Verfahren nach einem der vorangehenden Ansprüche, **dadurch gekennzeichnet, daß** das digitale off-axis-Hologramm mittels eines Halbleiterelements, insbesondere eines CCD-Sensors (12), aufgezeichnet, nachfolgend diskretisiert und zur digitalen Weiterverarbeitung in einer Datenverarbeitungseinrichtung, insbesondere einem Computer, gespeichert wird.

**12.** Verfahren nach einem der vorangehenden Ansprüche, **dadurch gekennzeichnet, daß** das off-axis-Hologramm mittels eines digitalholographischen Mikroskops bereitgestellt wird.

**13.** Verfahren nach Anspruch 11, **dadurch gekennzeichnet, daß** das Mikroskop in einem Durchlichtbetrieb betrieben wird.

**14.** Verfahren nach Anspruch 11, **dadurch gekennzeichnet, daß** das Mikroskop in einem Auflichtbetrieb betrieben wird.

**15.** Verfahren nach einem der vorangehenden Ansprüche, **dadurch gekennzeichnet, daß** das off-axis-Hologramm mit Lichtstrahlung aufgezeichnet wird.

**16.** Digitalholographisches Mikroskop, **gekennzeichnet durch** eine elektronische Rekonstruktionseinrichtung, die gestaltet ist, um anhand eines mit dem Mikroskop aufgezeichneten digitalen off-axis-Hologramms von einem Objekt (10) die komplexe Amplitude der Objektwelle (OW) des Objekts (10) in der Hologrammebene des digitalen off-axis-Hologramms mittels eines räumlichen Phasenschiebeverfahrens zu berechnen und die für die Hologrammebene berechnete komplexe Amplitude in mindestens eine zu genannter Hologrammebene parallele Ebene mittels der Faltungsmethode zu propagieren.

**17.** Digitalholographisches Mikroskop nach Anspruch 15, **dadurch gekennzeichnet, daß** die elektronische Rekonstruktionseinrichtung gestaltet ist, um zusätzlich mindestens einen der Verfahrensschritte gemäß einem der Ansprüche 2 bis 9 auszuführen.

Figur 1

Figur 2

(a)  (b)  (c)

(d)  (e)  (f)

Figur 3

**Europäisches Patentamt**

**EUROPÄISCHER RECHERCHENBERICHT**

Nummer der Anmeldung

EP 05 01 6355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | LIEBLING M ET AL: "Complex-wave retrieval from a single off-axis hologram" JOURNAL OF THE OPTICAL SOCIETY OF AMERICA A (OPTICS, IMAGE SCIENCE AND VISION) OPT. SOC. AMERICA USA, Bd. 21, Nr. 3, März 2004 (2004-03), Seiten 367-377, XP002364432 ISSN: 0740-3232 * Absätze [0001], [002B], [004C]; Abbildungen 1,7 * ----- | 1-16 | G03H1/08 G03H1/00 |
| Y,D | CARL D ET AL: "Parameter-optimized digital holographic microscope for high-resolution living-cell analysis" APPLIED OPTICS OPT. SOC. AMERICA USA, Bd. 43, Nr. 36, 20. Dezember 2004 (2004-12-20), Seiten 6536-6544, XP002364433 ISSN: 0003-6935 * Absätze [0001], [002C], [003B]; Abbildungen 1,4,8 * ----- | 1-16 | |
| Y | KREIS T M ET AL: "Principles of digital holographic interferometry" PROCEEDINGS OF THE SPIE - THE INTERNATIONAL SOCIETY FOR OPTICAL ENGINEERING SPIE-INT. SOC. OPT. ENG USA, Bd. 3478, 1998, Seiten 45-54, XP002364434 ISSN: 0277-786X * Absatz [0003] * ----- -/-- | 1,15 | **RECHERCHIERTE SACHGEBIETE (IPC)** G03H |

Der vorliegende Recherchenbericht wurde für alle Patentansprüche erstellt

| Recherchenort | Abschlußdatum der Recherche | Prüfer |
|---|---|---|
| München | 25. Januar 2006 | Noirard, P |

EPO FORM 1503 03.82 (P04C03)

Europäisches
Patentamt

**EUROPÄISCHER RECHERCHENBERICHT**

Nummer der Anmeldung

EP 05 01 6355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GRILLI S., FERRARO P. ET AL: "Whole optical wavefields reconstruction by Digital Holography" OPTICS EXPRESS, Bd. 9, Nr. 6, 10. September 2001 (2001-09-10), Seiten 294-302, XP002364435 * Absätze [0002], [02.1]; Abbildungen 1,4 * ----- | 1,15 | |
| Y | YAMAGUCHI I ET AL: "Phase-shifting color digital holography" OPTICS LETTERS, OSA, OPTICAL SOCIETY OF AMERICA, WASHINGTON, DC, US, Bd. 27, Nr. 13, 1. Juli 2002 (2002-07-01), Seiten 1108-1110, XP002308739 ISSN: 0146-9592 * Seite 1109 - Seite 1110 * ----- | 1,15 | |
| Y | FERRARO P ET AL: "Controlling image size as a function of distance and wavelength in Fresnel-transform reconstruction of digital holograms" OPTICS LETTERS OPT. SOC. AMERICA USA, Bd. 29, Nr. 8, 15. April 2004 (2004-04-15), Seiten 854-856, XP002364436 ISSN: 0146-9592 * das ganze Dokument * ----- -/-- | 1,8,9,15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 25. Januar 2006 | Noirard, P |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
  Dokument

EPO FORM 1503 03.82 (P04C03)

**Europäisches Patentamt**

# EUROPÄISCHER RECHERCHENBERICHT

Nummer der Anmeldung

EP 05 01 6355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ZHANG T ET AL: "THREE-DIMENSIONAL MICROSCOPY WITH PHASE-SHIFTING DIGITAL HOLOGRAPHY" OPTICS LETTERS, OSA, OPTICAL SOCIETY OF AMERICA, WASHINGTON, DC, US, Bd. 23, Nr. 15, 1. August 1998 (1998-08-01), Seiten 1221-1223, XP000783068 ISSN: 0146-9592 * Seite 1222 - Seite 1223; Abbildungen 3-5 * | 4-7 | |
| | ----- | | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 25. Januar 2006 | Noirard, P |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes
Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **THOMAS M. KREIS ; MAIK ADAMS ; WERNER P. O. JÜPTNER.** Methods digital holography: A comparison. *SPIE,* vol. 3098, 224-233
- **DANIEL CARL ; BJÖRN KEMPER ; GÜNTHER WEMICKE ; GERT VON BALLY.** Parameter-Optimized Digital Holographic Microscope for High Resolution Living-Cell Analysis. *Applied Optics,* 20. Dezember 2004, vol. 43 (36), 6536-6544
- **MICHAEL LIEBLING ; THIERRY BLU ; MICHAEL UNSER.** Complex-wave retrieval from a single off-axis hologram. *J. Opt. Soc. Am A,* Marz 2004, vol. 21 (3), 367-377
- **THOMAS FRICKE-BERGEMANN ; JAN BURKE.** Speckle interferometry: three-dimensional deformation field measurement with a single interferogram. *Applied Optics,* vol. 40 (28), 5011-5022
- **AKRAM EL JARAD ; GERD GÜLKER ; KLAUS D. HINSCH.** Microscopic ESPI: Better fringe quality by the Fourier transform method. *Proc. Speckle Metrology,* 2003, 335-242